# EUROPÄISCHE PATENTANMELDUNG

(11) **EP 1 588 926 A2**
(43) Veröffentlichungstag der Anmeldung: **26.10.2005**
(21) Anmeldenummer: 05102675.5
(22) Anmeldetag: 05.04.2005
(51) Int. Cl.: B62D 5/04, B62D 5/06

(54) **Lenkgetriebe mit Überlagerungslenkung**

(30) Priorität: 24.04.2004 DE 102004020075; 22.12.2004 DE 102004061834
(71) Anmelder: Bayerische Motoren Werke Aktiengesellschaft, 80809 München (DE)
(72) Erfinder: Schmidt, Roland, 82131 Stockdorf (DE)

(57) **Zusammenfassung**

Die Erfindung betrifft ein Lenkgetriebe mit Überlagerungslenkung für ein zweispuriges Fahrzeug, mit einem Rotations-Translations-Trieb, mit dem eine Drehbewegung einer Lenkhandhabe in eine translatorische Bewegung einer Getriebe-Spindel (32) gewandelt werden kann, an deren Enden direkt oder indirekt an den lenkbaren Fahrzeug-Rädern geeignet angreifende Spurstangen angelenkt sind, sowie mit einer Überlagerungseinrichtung (56), mit welcher die Getriebe-Spindel (32) gegenüber der durch die Lenkhandhabe vorgegebenen Position weiter translatorisch verlagert werden kann. Dabei ist der Rotations-Translations-Trieb durch eine auf der Getriebe-Spindel (32) gewindeartig verdrehbare Spindel-Mutter (28) gebildet, die über ein erstes Stellelement (19) unter Beibehaltung ihrer Position in Richtung der Spindel-Längsachse (33) betrachtet um diese Längsachse verdrehbar ist, während eine weitere translatorische Verlagerung der Getriebe-Spindel (32) im Zusammenwirken mit der Spindel-Mutter (28) durch ein zweites Stellelement (53) erzeugbar ist, das entweder bei gegen Verdrehen um ihre Längsachse (33) gesicherter Getriebe-Spindel (32) eine Längsverlagerung der Spindel-Mutter (28) in Richtung der Spindel-Längsachse erzeugen oder bei gegen eine Längsverlagerung gesicherter Spindel-Mutter (28) eine Rotationsbewegung der Getriebe-Spindel (32) um ihre Längsachse (33) bewirken kann.

## Beschreibung

Die Erfindung betrifft ein Lenkgetriebe mit Überlagerungslenkung für ein zweispuriges Fahrzeug, mit einem Rotations-Translations-Trieb, mit dem eine Drehbewegung einer Lenkhandhabe in eine translatorische Bewegung einer Getriebe-Spindel gewandelt werden kann, an deren Enden direkt oder indirekt an den lenkbaren Fahrzeug-Rädern geeignet angreifende Spurstangen angelenkt sind, sowie mit einer Überlagerungseinrichtung, mit welcher die Getriebe-Spindel gegenüber der durch die Lenkhandhabe vorgegebenen Position weiter translatorisch verlagert werden kann.

Heutige Fahrzeuge, insbesondere Personenkraftwagen, sind in der Regel mit einer Lenkhandhabe bzw. einem Lenkrad versehen, das mechanisch mit lenkbaren Fahrzeugrädern zwangsgekoppelt ist. Ferner ist eine Lenkunterstützungseinrichtung (Servounterstützung) vorgesehen, mit der hydraulisch oder elektrohydraulisch oder elektromechanisch die Betätigung des Lenkmechanismus in Reaktion auf die Drehung der Lenkhandhabe unterstützt wird. Dadurch ist der Kraftaufwand für einen Fahrer des Fahrzeugs beim Lenken verringert. Die Lenkunterstützungseinrichtung ist oftmals als Hydraulikzylinder gestaltet, der im Mittelbereich eines zugehörigen Lenkmechanismus angeordnet ist und dort eine translatorische Bewegung eines Elements des Mechanismus unterstützt.

Es sind ferner Überlagerungslenkungen bekannt, mittels denen dem vom Fahrer vorgegebenen Lenkwinkel unter bestimmten Betriebszuständen des zugehörigen Fahrzeugs eine weitere Lenkbewegung mittels eines Aktuators überlagert werden kann. Die zusätzliche Lenkbewegung wird durch einen Regler definiert und dient beispielsweise zur Erhöhung der Stabilität und Agilität des Fahrzeugs, zur Kompensation von Störgrößen und zur Anpassung der Radlenkwinkel als Funktion der Fahrgeschwindigkeit des Fahrzeugs.

Aus der DE 197 45 733 A1 ist eine solche Überlagerungslenkung bekannt, bei der das gesamte Gehäuse eines Lenkgetriebes relativ zum Fahrzeug verschoben werden kann, um eine daraus resultierende, überlagerte lineare Bewegung einer Spurstange hervorzurufen. Das Verschieben des Gehäuses geschieht bspw. mittels einer Zylinder-Kolben-Anordnung, die außen an dem Gehäuse ansetzt und gegenüber dem restlichen Fahrzeug abgestützt ist. Auf diese Weise kann die Relativbewegung zwischen Gehäuse und Fahrzeug erreicht werden. Aus der DE 101 59 700 A1 ist ferner ein Überlagerungsgetriebe für eine Überlagerungslenkung bekannt, bei dem durch das Überlagerungsgetriebe eine vom Fahrer eingegebene Rotationsbewegung zwischen einem Lenkrad und einem Lenkgetriebe mittels eines ersten Rotations/Translations-Triebes in eine translatorische Bewegung umgewandelt und dieser Translationsbewegung mittels eines zweiten Rotations/Translations-Triebes eine weitere Bewegung überlagert wird.

Bei diesen bekannten Überlagerungslenkungen wird durch den Einbau des Überlagerungsgetriebes im Lenkungsstrang zusätzlicher Bauraum benötigt, was teilweise zu erheblichen Package-Problemen führt, weshalb hiermit ein demgegenüber verbessertes Lenkgetriebe nach dem Oberbegriff des Anspruchs 1 aufgezeigt werden soll (= Aufgabe der vorliegenden Erfindung).

Die Lösung dieser Aufgabe ist dadurch gekennzeichnet, dass der Rotations-Translations-Trieb durch eine auf der Getriebe-Spindel gewindeartig verdrehbare Spindel-Mutter gebildet ist, die über ein erstes Stellelement unter Beibehaltung ihrer Position in Richtung der Spindel-Längsachse betrachtet um diese Längsachse verdrehbar ist, während eine weitere translatorische Verlagerung der Getriebe-Spindel im Zusammenwirken mit der Spindel-Mutter durch ein zweites Stellelement erzeugbar ist, das entweder bei gegen Verdrehen um ihre Längsachse gesicherter Getriebe-Spindel eine Längsverlagerung der Spindel-Mutter in Richtung der Spindel-Längsachse erzeugen oder bei gegen eine Längsverlagerung gesicherter Spindel-Mutter eine Rotationsbewegung der Getriebe-Spindel um ihre Längsachse bewirken kann. Vorteilhafte Aus- und Weiterbildungen sind Inhalt der Unteransprüche.

Mit den soweit vorgeschlagenen Merkmalen ist es möglich, sowohl die Einleitung der Drehbewegung der Lenkhandhabe und somit des Fahrer-Lenkwunsches als auch die Einleitung eines diesem überlagerten Lenkwinkels zumindest funktional quasi in einem einzigen Bauelement zusammenzufassen, nämlich in der so genannten Spindel-Mutter, die auf der Getriebe-Spindel, deren Längsverschiebung über die besagten Spurstangen an die lenkbaren Fahrzeug-Räder weitergegeben wird, gewindeartig verdrehbar ist. Diese "gewindeartige Verdrehbarkeit" stellt also eine Schraubbewegung mit einer gewissen Steigung dar, d.h. eine Kombination aus einer Verdrehung um die Längsachse der Getriebe-Spindel und einer Translation in Richtung derselben. Dabei kann diese "gewindeartige Verdrehbarkeit" durch übliche Konstruktionselemente bzw. Bauweisen umgesetzt sein, bevorzugt wird hierfür jedoch ein Kugelgewindetrieb zwischen der Getriebe-Spindel und der Spindel-Mutter, die hierfür eine gewisse Längserstreckung aufweisen kann bzw. sollte, vorgeschlagen.

Nun kann also die auf der Getriebe-Spindel gewindeartig verdrehbare Spindel-Mutter mittels eines ersten Stellelementes um die Spindel-Längsachse verdreht werden, was eine translatorische Verlagerung dieser Getriebe-Spindel und letztlich somit einen gewünschten Lenkeinschlag der lenkbaren Räder hervorruft. Dabei kann - wie auch in den Unteransprüchen näher ausgeführt ist - die Verdrehung der Spindel-Mutter über ein geeignetes Getriebe letztlich von der Lenkhandhabe veranlasst werden, wobei in einer bevorzugten Ausführungsform die Lenksäule bzw. Lenkspindel der Lenkhandhabe (= des Lenkrades) über ein als Kegelrad-Tellerrad-Getriebe ausgebildetes Zahnradgetriebe mit dem ersten Stellelement zusammenwirkt, das ein mit einem der Lenkspindel zugeordneten Tellerrad kämmendes Kegelrad aufweist. Da dieses Stellelement im Hinblick auf die Lenksäule bzw. das damit verbundene Kegelrad-Tellerrad-Getriebe seine Position in Richtung der Längsachse der Getriebe-Spindel nicht verändern sollte, soll somit zumindest das Kegelrad des ersten Stellelements, bevorzugt jedoch das gesamte erste Stellelement relativ zur Spindel-Mutter längsverlagerbar, dabei jedoch gegenüber dieser drehfest sein. Dies kann bevorzugt mittels einer entsprechenden Kerbverzahnung zwischen der Spindel-Mutter und dem konzentrisch auf dieser angeordneten ersten Stellelement umgesetzt sein.

Alternativ oder zusätzlich zur Veranlassung einer Verdrehung der Spindel-Mutter durch die Lenkspindel bzw. Lenkhandhabe des Fahrers kann das erste Stellelement nach einer bevorzugten Ausführungsform mittels eines Elektromotors bzw. zumindest mit dessen Unterstützung in eine Drehbewegung um die Spindel-Längsachse versetzt werden. Im letztgenannten Fall dient der Elektromotor als Servomotor und unterstützt somit den Fahrer beim Aufbringen des erforderlichen Lenkmoments (wobei der gewünschte Lenkwinkel von der Lenkhandhabe über das genannte Tellerrad-KegelradGetriebe an das erste Stellelement und von diesem über die Spindel-Mutter zur Getriebe-Spindel geleitet wird), während im erstgenannten Fall über den Elektromotor ein dem Fahrer-Lenkwunsch überlagerter Lenkwinkel in das Lenkgetriebe eingeleitet werden kann. Grundsätzlich kann dabei der besagte Elektromotor das erste Stellelement auf unterschiedliche Weise verdrehen, so bspw. unter Zwischenschaltung eines endlosen Zugmittelgetriebes.

An dieser Stelle sei darauf hingewiesen, dass, wenn von einer Einleitung eines dem Fahrer-Lenkwunsch überlagerten Lenkwinkels die Rede ist, nicht zwangsweise eine Änderung des Fahrer-Lenkwunsches vorliegen muss.

Vielmehr kann auch dann, wenn der Fahrer seine Lenkhandhabe, d.h. sein Lenkrad bspw. in Mittelstellung festhält, über die Überlagerungseinrichtung ein "zusätzlicher" Lenkwinkel in das Lenkgetriebe eingeleitet bzw. in diesem erzeugt und über eine entsprechende translatorische Verlagerung der Getriebe-Spindel und somit der daran angelenkten Spurstangen an die lenkbaren Fahrzeug-Räder weitergeleitet werden.

An der besagten Spindel-Mutter kann nun neben dem ersten Stellelement alternativ oder zusätzlich noch ein zweites Stellelement direkt oder indirekt angreifen. Falls der vom Fahrer vorgegebene Lenkwunsch über das erste Stellelement eingeleitet wird, so kann ein bereits genannter Überlagerungs-Lenkwinkel über das zweite Stellelement eingeleitet bzw. umgesetzt werden. Erfolgt hingegen letzteres über das erste Stellelement, so kann über das zweite Stellelement die Einleitung bzw. Umsetzung des Fahrer-Lenkwunsches erfolgen. Dabei bestehen für die Einleitung bzw. Umsetzung einer Lenkbewegung über das zweite Stellelement abermals verschiedene Möglichkeiten.

Nach einer ersten bevorzugten Ausführungsform kann das zweite Stellelement über ein vorzugsweise an einer Stirnseite der Spindel-Mutter gegenüber dieser drehbar angelenktes Schiebestück auf die Spindel-Mutter einwirken bzw. diese in Richtung der Spindel-Längsachse translatorisch verlagern. An diesem Schiebestück kann beispielsweise abermals über einen Spindeltrieb ein Elektromotor angreifen; alternativ jedoch auch bspw. eine Zahnstange, die mit einem von der Lenkhandhabe des Fahrers betätigten Ritzel zusammenwirkt. Nach einer zweiten Ausführungsform kann die Getriebe-Spindel durch das zweite Stellelement um ihre Längsachse verdreht werden, was dann in Zusammenwirken mit der Spindel-Mutter eine entsprechend gewünschte translatorische Verlagerung der Getriebe-Spindel hervorruft. Selbstverständlich muss im Falle einer verdrehbaren Getriebe-Spindel die Verbindung zwischen dieser und den die translatorische Verlagerung der Getriebe-Spindel auf die lenkbaren Fzg.-Räder übertragenden Spurstangen eine entsprechende, die Drehbewegung der Getriebe-Spindel nicht übertragende Verbindung vorgesehen sein. Um eine Verdrehung der Getriebe-Spindel zu erzeugen, kann dabei das zweite Stellelement in Form eines von einem Elektromotor angetriebenen Mitnahmeelements auf die Getriebe-Spindel einwirken, und zwar bevorzugt als sog. Überlagerungseinrichtung, mit der dem Fahrer-Lenkwunsch ein zusätzlicher Lenkwinkel überlagert werden kann.

Gemäß den bisherigen weitergehenden Erläuterungen ist am sog. ersten Stellelement und/oder am sog. zweiten Stellelement ein dessen jeweilige Verstellbewegung hervorrufender oder zumindest unterstützender Elektromotor vorgesehen. Alternativ hierzu ist jedoch auch ein hydraulischer Antrieb möglich, und zwar vorzugsweise (jedoch nicht notwendigerweise) sowohl für die Einleitung einer Unterstützungskraft als auch für die sog. Überlagerungseinrichtung, wie im folgenden weiter ausgeführt wird.

Mit der weiterhin (in Anspruch 8) vorgeschlagenen Integration einer Zylinder-Kolben-Anordnung als Überlagerungseinrichtung in das Lenkgetriebe einer Überlagerungslenkung hinein geht die Erfindung einen neuen Weg, denn im Gegensatz zu bekannten Lösungen fehlt die klassische Abstützung der Zylinder-Kolben-Anordnung am Chassis des Fahrzeugs, mittels der eine Relativbewegung zwischen dem Lenkgetriebe und dem Chassis des Fahrzeugs erzeugt werden konnte (vgl. die eingangs genannte DE 197 45 733 A1). Nun wird die zu erzeugende überlagerte Bewegung translatorisch innerhalb des Lenkgetriebes erzeugt. Die derart gestaltete Anordnung lässt sich zumindest annähernd im Bauraum eines konventionellen Lenkgetriebes integrieren. Als weitere Vorteile ergeben sich ein besonders geringes Gewicht, ein einfacher Aufbau und damit geringe Kosten in der Herstellung, Montage und Wartung.

Die genannte Zylinder-Kolben-Anordnung kann von einer vorhandenen Lenkhilfepumpe oder auch von einer separaten (in der Regel elektrisch angetriebenen) Pumpe mit Hydraulikfluid versorgt werden. Bei der Verwendung einer separaten Pumpe zur Ansteuerung der erfindungsgemäßen Zylinder-Kolben-Anordnung kann diese Pumpe in einen im Hinblick auf Package-Probleme unkritischen Bauraum angeordnet sein. Ferner entfallen bei der erfindungsgemäßen Überlagerungseinrichtung beispielsweise Plantetenradgetriebe und Elektromotoren, wie sie heute vielfach für diese Aufgaben verwendet werden.

Auch hier ist der sog. Rotations-Translations-Trieb des Lenkgetriebes mit einer Mutter-Spindel-Anordnung gestaltet, bei der sowohl die Spindel-Mutter als auch die Getriebe-Spindel verschiebbar geführt sind. Die Spindel-Mutter kann beispielsweise als Kugelumlaufmutter gestaltet sein, die innerhalb eines Gehäuses des Lenkgetriebes verdrehbar ist und ferner in diesem Gehäuse in der Längsrichtung der zugehörigen Getriebe-Spindel verschoben werden kann. Das Verschieben der Mutter-Spindel-Anordnung geschieht in diesem Fall mit Hilfe der integrierten Zylinder-Kolben-Anordnung, wodurch dann die sich in der Spindel-Mutter befindende Getriebe-Spindel ebenfalls verschoben wird. Das Verschieben der Getriebe-Spindel ergibt die überlagerte, weitere translatorische Bewegung.

Eine Verschiebung der Spindel-Mutter relativ zum Gehäuse des Lenkgetriebes wird besonders vorteilhaft ermöglicht, indem die Spindel-Mutter von einem sog. Rotationselement des Rotations/Translations-Triebes als weiter oben bereits genannten ersten Stellelement umgeben ist, das in dem Gehäuse des Lenkgetriebes drehbar gelagert ist und in dem die Spindel-Mutter durch eine Kerbverzahnung oder einen Kugelumlauf bzw. einen Kugelgewindetrieb momentenübertragend und zugleich in Längsrichtung bewegbar geführt ist.

Die genannte Kerbverzahnung kann beispielsweise als Längsverzahnung gestaltet sein, die bei einer Drehung des Rotationselements bzw. ersten Stellelements aufgrund einer Bewegung der Lenkhandhabe diese Drehung auf die Spindel-Mutter überträgt und dennoch eine Längsverschiebung der Spindel-Mutter mit Hilfe der integrierten Zylinder-Kolben-Anordnung ermöglicht. Alternativ kann die genannte Kerbverzahnung oder ein Kugelumlauf zwischen der Spindel-Mutter und dem Rotationselement bzw. ersten Stellelement mit einer Gewindesteigung versehen sein. Indem diese Verzahnung zwischen der Spindel-Mutter und dem Rotationselement dann nicht als Linearführung, sondern als Gewinde mit Steigung gestaltet ist, bewirkt ein Verschieben der Getriebe-Mutter mit Hilfe der integrierten Zylinder-Kolben-Anordnung eine zusätzliche Verdrehung der Spindel-Mutter, die dann zu einer zusätzlichen Verschiebung der Getriebe-Spindel innerhalb der Spindel-Mutter führt. Auf diese Weise kann der erforderliche Stellweg des Kolbens der integrierten Zylinder-Kolben-Anordnung zur Erzielung eines bestimmten Überlagerungsweges an der Getriebe-Spindel vergleichsweise klein gehalten werden. Es kann so ein besonders kurzes erfindungemäßes Lenkgetriebe mit geringem Bauraum gestaltet werden. Zur Erzielung der erforderlichen Überlagerungskraft ist die Wirkfläche des Kolbens der derart integrierten Zylinder-Kolben-Anordnung entsprechend vergrößert. Damit der gewünschte Übersetzungseffekt erzielt werden kann, ist die Gewindesteigung zwischen der Spindel-Mutter und dem Rotationselement bzw. ersten Stellelement entgegengesetzt zur Gewindesteigung der Kopplung zwischen der Spindel-Mutter und der Getriebe-Spindel gerichtet.

Damit in dem vorgeschlagenen Lenkgetriebe die Reibungsverluste möglichst gering gehalten werden, ist es vorteilhaft, wenn der Kolben der Überlagerungseinrichtung kraftübertragend aber drehbar mit der Spindel-Mutter der Mutter-Spindel-Anordnung gekoppelt ist. Eine Drehbewegung des Kolbens und damit verbundene Reibungsverluste beim Drehen der Spindel-Mutter entfallen bei einer derartigen Anordnung.

Die vorgeschlagene Überlagerungseinrichtung eignet sich besonders gut zur Anordnung in einem Lenkgetriebe, bei dem ferner eine Lenkunterstützungseinrichtung vorgesehen ist, die ebenfalls mit einer Zylinder-Kolben-Anordnung gestaltet ist. Das Lenkgetriebe kann dann insgesamt als längliche Baugruppe gestaltet werden, die in einem Fahrzeug, insbesondere einem Personenkraftwagen, ähnlich wie bekannte Lenkgetriebe platz- und funktionsoptimiert verbaut werden kann. Diese Art der Anordnung ist besonders vorteilhaft weitergebildet, indem die Kolben der Überlagerungseinrichtung und der Lenkunterstützungseinrichtung koaxial ausgerichtet sind. Die Kolben können dann beispielsweise beide an der Spindel der oben genannten Mutter-Spindel-Anordnung ortsfest bzw. verschiebbar angeordnet sein. Damit die gewünschten Überlagerungs- und Lenkunterstützungsfunktionen realisiert werden können, sollten die Wirkflächen des Kolbens der Überlagerungseinrichtung und die des Kolbens der Lenkunterstützungseinrichtung im Wesentlichen gleich groß gestaltet sein.

Bei einem derartigen Lenkgetriebe, bei dem sowohl eine Überlagerungseinrichtung als auch eine Lenkunterstützungseinrichtung vorhanden sind, müssen bei Überlagerung einer Lenkbewegung sowohl der Hydraulik-Zylinder der Überlagerungseinrichtung als auch der Hydraulik-Zylinder der Lenkunterstützungseinrichtung mit Hydraulikfluid gefüllt werden. Damit der dabei von einer Pumpe zu fördernde Hydraulikstrom vergleichsweise gering ist, beziehungsweise keine größere Pumpe als bei einem herkömmlichen Lenkgetriebe benötigt wird, sollte zwischen der Überlagerungseinrichtung und der Lenkunterstützungseinrichtung eine wahlweise zu öffnende hydraulische Verbindung vorgesehen sein, durch die beim Bewegen des Kolbens der Überlagerungseinrichtung Hydraulikfluid in den Zylinder der Lenkunterstützungseinrichtung verschoben wird. Die Steuerung des durch die genannte Verbindung strömenden Hydraulikfluids kann beispielsweise mittels eines doppelten 4/3-Wegeventils erreicht werden, welches nachfolgend noch näher beschrieben werden wird.

Schließlich sei noch angemerkt, dass das erfindungsgemäße Lenkgetriebe vorteilhaft mit einem Wegsensor am Kolben der Überlagerungseinrichtung versehen ist, so dass die Stellung und/oder die Bewegung des Kolbens bei der Steuerung der überlagerten Bewegung berücksichtigt werden kann. Um die Betriebssicherheit der erfindungsgemäßen Fahrzeuglenkung unter allen Betriebszuständen zu gewährleisten, kann ferner für den Kolben der Überlagerungseinrichtung eine Sperreinrichtung zur Lagesicherung des Kolbens bei einer Betriebsstörung vorgesehen sein

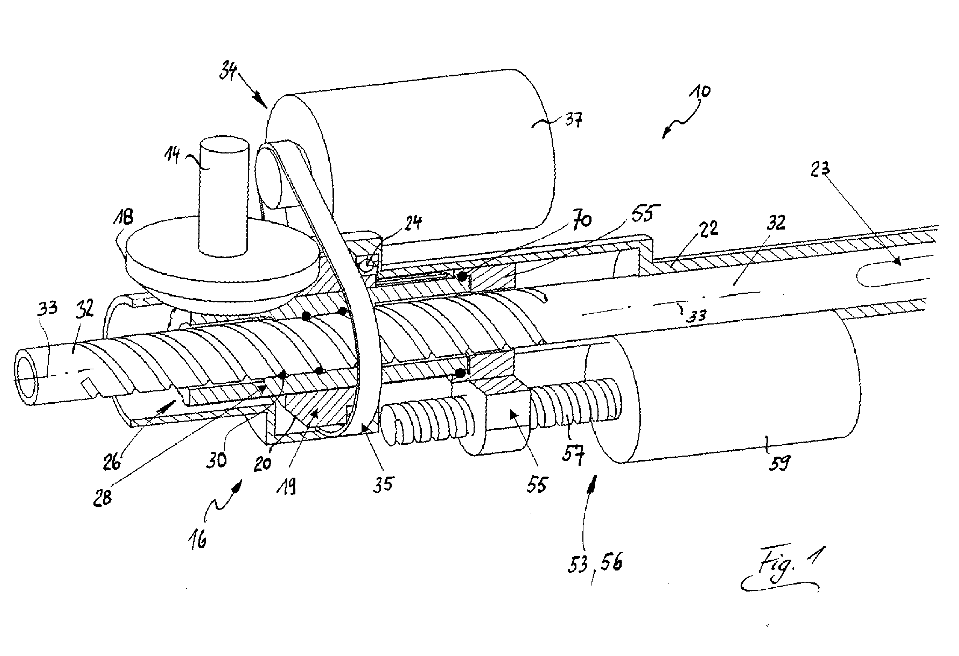

Im folgenden wird die Erfindung anhand mehrerer bevorzugter Ausführungsbeispiele weiter erläutert, die in den beigefügten Figuren 1 bis 5 dargestellt sind. Dabei sind in sämtlichen Figuren gleiche Elemente mit den gleichen Bezugsziffern gekennzeichnet.

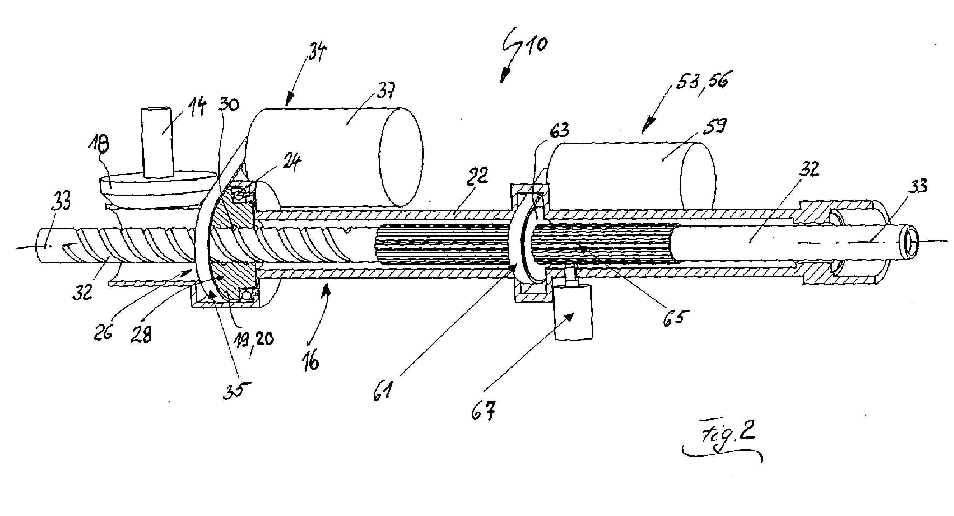

Die Figuren 1, 2 zeigen in leicht perspektivischen Teil-Schnitten dabei zwei Ausführungsformen mit an den beiden Stellelementen angreifenden Elektromotoren. In diesen Figuren 1, 2 dargestellt ist eine Überlagerungslenkung 10 mit einem in seiner Gesamtheit mit der Bezugsziffer 16 gekennzeichneten Lenkgetriebe für eine Fahrzeug-Lenkung für ein zweispuriges Kfz, insbesondere einen Personenkraftwagen. Das Lenkgetriebe 16 ist mit einer sog. Überlagerungseinrichtung 56 ausgestattet, mit der einem vom Fahrer des Fahrzeugs mit seinem hier nicht dargestellten Lenkrad (= Lenkhandhabe) vorgegebenen Lenkwunsch ein zusätzlicher Lenkwinkel überlagert werden kann. Das Lenkgetriebe 16 weist insbesondere eine Getriebe-Spindel 32 auf, die längs deren im wesentlichen in Fzg.-Querrichtung ausgerichteten Längsachse 33 translatorisch verschiebbar ist. An den beiden Enden dieser Getriebe-Spindel 32 sind sog. Spurstangen angelenkt (nicht gezeigt), die geeignet mit den lenkbaren Vorder-Rädern des Fahrzeugs verbunden sind und diese bei einer Längsverschiebung der Getriebe-Spindel 32 entsprechend einschlagen bzw. lenken. Insofern entspricht die Getriebe-Spindel 32 einer Zahnstange einer üblichen Zahnstangen-Lenkung, bei der mit der Zahnstange ein vom Fahrer mit seinem Lenkrad betätigtes Ritzel kämmt.

Die Getriebe-Spindel 32 ist in einem Gehäuse 22 des Lenkgetriebes 16 längsverschiebbar geführt. In einem Teilabschnitt ist dieses Gehäuse 22 erweitert und nimmt eine sog. Spindel-Mutter 28 auf, die gewindeartig auf der Getriebe-Spindel 32 angeordnet ist bzw. mit dieser zusammenwirkt. Diese Spindel-Mutter 28 ist also gewindeartig unter translatorischer RelativBewegung gegenüber der Getriebe-Spindel 32 verdrehbar, was hier durch ein Kugelgewindetrieb 30 realisiert ist.

Im weiteren zunächst nur auf das Ausführungsbeispiel nach Figur 1 eingehend ist die Getriebe-Spindel 32 nur längsverschiebbar, nicht jedoch um ihre Längsachse 33 verdrehbar im Gehäuse 22 geführt, und zwar über eine sog. Verdrehsicherungs-Nut 23. Auf der Spindel-Mutter 28 ist außenseitig und diese dabei konzentrisch umgebend ein sog. erstes Stellelement 19 angeordnet, das drehfest, jedoch in Richtung der Spindel-Längsachse 33 längsverlagerbar mit der Spindel-Mutter 28 zusammenwirkt. Dieses erste Stellelement 19 ist über ein Kugellager 24 oder dgl. im Gehäuse 22 drehbar gelagert. Die Getriebe-Spindel 32 bildet mit der Spindel-Mutter 28 und dem ersten Stellelement 19 eine sog. Mutter-Spindel-Anordnung 26. Auf der Oberfläche bzw. dem Umfang des ersten Stellelements 19 ist ein Zahnrad-Getriebeelement in Form eines Kegelrads 20 herausgearbeitet. Dieses Kegelrad 20 kämmt mit einem entsprechenden Kegelrad oder Tellerrad 18, das über eine Lenksäule 14 (auch oder genauer Lenkspindel genannt) mit dem hier nicht gezeigten Lenkrad (des Fahrers) verbunden ist. Ferner bzw. neben dem Kegelrad 20 ist auf dem ersten Stellelement 19 eine Abwälzfläche für einen Zahnriemen 35 oder dgl., d.h. allgemein für ein endloses Zugmittelgetriebe (für das ebenfalls die Bezugsziffer 35 verwendet wird), vorgesehen, der bzw. das von einem Elektromotor 37 geeignet angetrieben wird. Dieser Elektromotor 37 fungiert zusammen mit dem Zahnriemen 35 als Lenkunterstützungseinrichtung 34 und kann somit geeignet angesteuert ein Servomoment aufbringen, das den Fahrer beim Lenken, d.h. beim Einstellen eines gewünschten Lenkwinkels über das Tellerrad 18 unterstützt.

Im weiteren wird nun die sog. Überlagerungseinrichtung 56 der Überlagerungslenkung 10 nach Fig.1 erläutert. An der rechtsseitigen Stirnseite der Spindel-Mutter 28 ist an diese über ein nicht näher dargestelltes Drehlager 70 ein Schiebestück 55 angebunden, das sich aus dem Gehäuse 22 hinaus erstreckt in jenem außerhalb liegenden Abschnitt eine gewindeartige Durchgangsöffnung für eine (weitere) Gewinde-Spindel 57 aufweist, die von einem (weiteren) Elektromotor 59 angetrieben, d.h. in Rotation versetzt werden kann. Dieser Elektromotor 49 ist (übrigens ebenso wie der als Servomotor fungierende andere Elektromotor 37) starr am Gehäuse 22 des Lenkgetriebes 16 befestigt. Das genannte Drehlager 70 wird somit benötigt, um eine weiter oben geschilderte Verdrehung der Spindel-Mutter 28 (in Verbindung mit einer Umsetzung eines Fahrer-Lenkwunsches) zu ermöglichen. Nun bewirkt also eine durch eine gezielte Rotation der Gewinde-Spindel 57 hervorgerufene Längsverschiebung des Schiebestücks 55 in Richtung der Spindel-Längsachse 33 eine ebensolche translatorische Verschiebung der Spindel-Mutter 28. Da diese Spindel-Mutter 28 über das erste Stellelement 19 und das Tellerrad 18 an einer Verdrehung um die Spindel-Längsachse 33 gehindert ist, wird also die Getriebe-Spindel 32 über die Eingriffe des Kugelgewindetriebs 30 bei einer Verschiebebewegung der Spindel-Mutter 28 von dieser einfach mitgenommen, so dass letztlich das Schiebestück 55 bzw. der Elektromotor 59 die Getriebe-Spindel 32 translatorisch verlagert, wobei das Schiebestück 55 und der Elektromotor 59 mit der Gewinde-Spindel 57 als sog. zweites Stellelement 53 bezeichnet werden können, das eine gewünschte Verlagerung der Getriebe-Spindel 32 hervorrufen kann.

Im weiteren auf das Ausführungsbeispiel nach Figur 2 eingehend ist hier die Getriebe-Spindel 32 sowohl längsverschiebbar als auch um ihre Längsachse 33 verdrehbar im Gehäuse 22 geführt. Dies erfordert selbstverständlich in den Übergängen zwischen der Getriebe-Spindel 32 und den bereits genannten Spurstangen geeignete Maßnahmen zur Entkopplung dieser Drehbewegung von der gewünschten (auf die lenkbaren Räder übertragenen) Spurstangen-Verlagerung, jedoch ist dies hier nicht dargestellt.

Hier besteht die Überlagerungseinrichtung 56 abermals aus einem Elektromotor 59 sowie aus einem von diesem über ein endloses Zugmittelgetriebe 61 (in Form eines Zahnriemens oder dgl.) angetriebenen Mitnahmeelement 63, das über eine Kerbverzahnung 65 drehfest jedoch längsverschiebbar auf der Getriebe-Spindel 32 angeordnet ist. Dabei ist selbstverständlich das Mitnahmeelement 63 in Richtung der Spindel-Längsachse 33 ortsfest geführt; hingegen ist - wie funktional erwünscht - die Getriebe-Spindel 32 gegenüber dem Mitnahmeelement 63 in Richtung der Spindel-Längsachse 33 translatorisch verschiebbar, wie an späterer Stelle noch näher erläutert wird.

Zunächst sei jedoch auf die gegenüber dem Ausführungsbeispiel nach Fig.1 einfacher gestaltete Spindel-Mutter 28 eingegangen, die hier mit dem ersten Stellelement 19 zu einer Baueinheit zusammengefasst ist. Somit ist die Spindel-Mutter 28 hier gegen eine Längsverlagerung in Richtung der Spindel-Längsachse 33 gesichert, und zwar durch das Kugellager 24 einerseits sowie andererseits durch den Eingriff des auch hier vorgesehenen Tellerrades 18 in das analog Fig.1auf dem ersten Stellelement 19 vorgesehene Kegelrad 20. Das erste Stellelement 19 ist somit analog dem Ausführungsbeispiel nach Fig.1 zusammen mit der Spindel-Mutter 28 um die Spindel-Längsachse 33 verdrehbar. Da die Spindel-Mutter 28 abermals gewindeartig unter Zwischenschaltung eines Kugelgewindetriebs 30 auf der Getriebe-Spindel 32 gelagert ist und diese über das genannte Mitnahmeelement 63 dann, wenn letzteres stillsteht, gegen Verdrehen gesichert ist, verursacht somit eine durch eine Verdrehbewegung des Tellerrads 18 hervorgerufene Verdrehbewegung des ersten Stellelements 19 eine entsprechende Verschiebung der Getriebe-Spindel 32 in Richtung ihrer Längsachse 33. Selbstverständlich gilt entsprechendes auch dann, wenn eine überlagerte Verdrehbewegung des Mitnahmeelementes 63 und eine daraus resultierende Verdrehbewegung der Getriebe-Spindel 32 stattfindet. Letztere wird dann im Zusammenwirken mit der Spindel-Mutter 28 in eine zusätzliche translatorische Verschiebung der Getriebe-Spindel 32 in Richtung von deren Längsachse 33 umgesetzt.

Die soweit beschriebenen Ausführungsformen der vorliegenden Erfindung bzw. diese in ihrer Allgemeinheit zeichnen sich durch einfachen kompakten Aufbau bei gleichzeitig größter funktionaler Zuverlässigkeit aus. Auf einfache Weise können insbesondere auch die beiden Elektromotoren 37 und 59, mit denen ein Servomoment bzw. ein Überlagerungs-Lenkwinkel in das Lenkgetriebe 16 eingeleitet werden, angebracht und zur Wirkung gebracht werden. Insbesondere können diese Elektromotoren derart angeordnet sien, dass das im Fahrzeug eingebaute Lenkgetriebe zur rechten und linken Seite hin annährend den gleichen Bauraumbedarf hat, so dass einfach Linkslenker- bzw. Rechtslenker-Fahrzeuge realisiert werden können.

Die vom Elektromotor 59 der Überlagerungseinrichtung 56 zu erbringende Leistung ist aufgrund der kleineren Überlagerungswege im Vergleich zum Gesamtweg, den die Getriebe-Spindel 32 zurücklegen kann, eher klein. Dabei wird mit dieser Überlagerungseinrichtung 56 auch ein über dem Lenkwinkel veränderliches Übersetzungsverhältnis realisiert, nachdem das Übersetzungsverhältnis des Kugelgewindetriebs 30 (abweichend von demjenigen mancher Zahnstangen-Lenksysteme) konstant ist. Dabei empfiehlt es sich, die Übersetzung des Kugelgewindetriebs 30 so zu wählen, dass sie der größtmöglichen Lenkübersetzung entspricht, da dann der das Servomoment bereitstellende Elektromotor 37 aufgrund der verringerten Momente kleiner ausgeführt werden kann. Dementsprechend muss der Elektromotor 59 der Überlagerungseinrichtung 56 etwas größer ausgeführt werden, da eine etwas höhere Leistung zu erbringen ist, so dass hiermit eine annähernd gleiche Arbeitsteilung zwischen den beiden Elektromotoren realisierbar ist.

Im übrigen ist in Fig.2 noch eine Sicherheitsverriegelung 67 für den Fall eines Ausfalls der Überlagerungseinrichtung 56 dargestellt, und zwar in Form eines elektromagnetisch initiierbaren Eingriffs in die Kerbverzahnung 65 der Getriebe-Spindel 32, die eine Verdrehung derselben verhindert.

Die weiteren Figuren 3 bis 5 zeigen hydraulisch betätigte erfindungsgemäße Lenkgetriebe ebenfalls in Längsschnitt, wobei Fig. 3 eine stark vereinfachte Teildarstellung eines ersten Ausführungsbeispiel zeigt, Fig. 4 eine teilweise längsgeschnittene perspektivische Ansicht eines zweiten Ausführungsbeispiels und Fig. 5 ein drittes Ausführungsbeispiel.

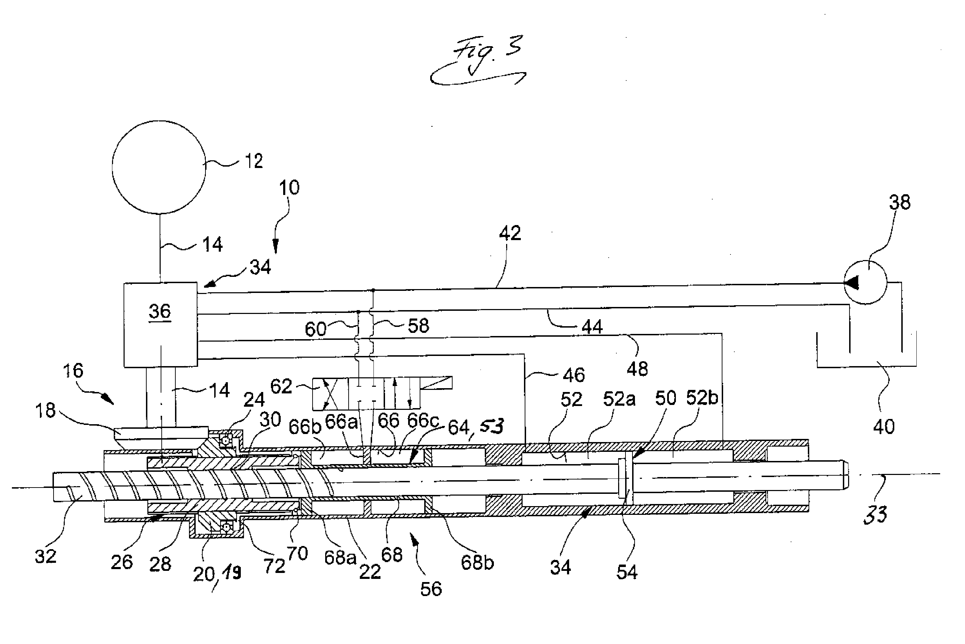

In Fig.3 ist ein Ausführungsbeispiel einer Überlagerungslenkung 10 eines weiter nicht veranschaulichten Fahrzeugs dargestellt, die von einem Fahrer des Fahrzeugs an einer Lenkhandhabe 12 bedient wird. Durch Drehen der Lenkhandhabe 12 bewegt der Fahrer eine Lenksäule 14, die die Drehbewegung auf ein Lenkgetriebe 16 überträgt. Am, bezogen auf Fig. 1, unterem Ende der Lenksäule 14 ist dazu ein Tellerrad 18 momentenübertragend angeordnet, das in ein Kegelrad 20 eingreift. Das Kegelrad 20 ist in einem länglichen Gehäuse 22 des Lenkgetriebes 16 mit Hilfe eines Lagers 24 quer zur Längsachse des Gehäuses 22 drehbar gelagert und fungiert als (weiter oben bereits genanntes) erstes Stellelement 19, weswegen diesem Bauteil diese beiden Bezugsziffern 19, 20 zugeordnet sind. Das Kegelrad 20 umgibt eine Mutter-Spindel-Anordnung 26, deren Spindel-Mutter 28 mit einem Kugelgewindetrieb 30 mit einer Gewindesteigung auf einer entsprechend angepassten Getriebe-Spindel 32 drehbar ist. Beim Drehen der Lenkhandhabe 12 wird mit dieser mechanischen Koppelung die Getriebe-Spindel 32 in Längsrichtung des Gehäuses 22 bzw. in längs der Spindel-Längsachse 33 verschoben und wirkt dann als Betätigungsstange für eine nicht weiter dargestellte Lenkmechanik des Fahrzeugs.

Das Lenkgetriebe 16 ist ferner mit einer Lenkunterstützungseinrichtung 34 in Gestalt einer Servounterstützung versehen, die über ein an der Lenksäule 14 angeordnetes Lenkventil 36 betätigt und gesteuert wird. Der Lenkunterstützungseinrichtung 34 wird von einer Pumpe 38 mit dem Lenkventil 36 wahlweise ein Hydraulikfluid zugeführt, welches die Pumpe 38 aus einem Tank 40 ansaugt und in eine Druckleitung 42 fördert. Überschüssiges bzw. rückströmendes Hydraulikfluid kann vom Lenkventil 36 aus durch eine Rückleitung 44 in den Tank 40 zurückgeführt werden. Die Pumpe 38 kann eine elektrisch angetriebene Pumpe oder eine herkömmliche Lenkhilfepumpe sein, die mittels eines Riementriebes angetrieben wird. Vorteilhaft ist es, wenn die Pumpe 38 für die nachfolgend noch beschriebene Überlagerungsfunktion einen vergrößerten Volumenstrom bzw. eine vergrößerte Förderleistung bereitstellt.

Am Lenkventil 36 sind ferner eine erste Leitung 46 und eine zweite Leitung 48 angeschlossen, die zu einer Zylinder-Kolben-Anordnung 50 führen, welche die eigentliche Lenkunterstützung leistet. Die Zylinder-Kolben-Anordnung 50 ist mit einem ersten Zylinder 52 gestaltet, der in dem Gehäuse 22 ausgebildet ist und in dem ein Kolben 54 verschiebbar geführt ist. Der Kolben 54 teilt den Zylinder 52 in zwei Zylinderkammern 52a und 52b, in die jeweils eine der beiden Leitungen 46 bzw. 48 münden. Durch entsprechende Zufuhr von Hydraulikfluid in eine der beiden Zylinderkammern 52a oder 52b und entsprechende Abfuhr von Hydraulikfluid aus der anderen Zylinderkammer wird an dem Kolben 54 ein Druckgefälle aufgebaut, das zur Verschiebung des Kolbens 54 führt. Der Kolben 54 ist mit der Getriebe-Spindel 32 kraftübertragend gekoppelt, so dass mit dem am Kolben 54 wirkenden Druck eine Kraft und damit eine Lenkunterstützung auf die Getriebe-Spindel 32 ausgeübt werden kann.

An dem Lenkgetriebe 16 ist ferner eine Überlagerungseinrichtung 56 vorgesehen, die als wesentliche Komponenten eine an der Druckleitung 42 abzweigende dritte Leitung 58, eine an der Rückleitung 54 abzweigende vierte Leitung 60, ein mit diesen Leitungen 58 und 60 verbundenes 4/3-Wegeventil 62 sowie eine Zylinder-Kolben-Anordnung 64 aufweist, die als (weiter oben bereits mehrfach genanntes) zweites Stellelement 53 fungiert und daher mit den beiden Bezugsziffern 64 und 53 gekennzeichnet ist. Die Zylinder-Kolben-Anordnung 64 umfasst einen Zylinder 66, der in das Gehäuse 22 des Lenkgetriebes 16 integriert ist und in dem ein zweiter Kolben 68 in Längsrichtung des Gehäuses 22 verschiebbar geführt ist. Der Zylinder 66 ist mit einer radial nach innen gerichteten Trennwand 66a versehen und der Kolben 68 ist derart im Querschnitt H-förmig gestaltet, dass zwischen der Trennwand 66a und zwei Stirnwänden 68a und 68b des Kolbens 68 zwei Zylinderkammern 66b und 66c begrenzt sind. In diese beiden Zylinderkammern 66b und 66c mündet jeweils eine der beiden Leitungen 58 bzw. 60, so dass beim Einführen von Hydraulikfluid durch eine der beiden Leitungen 58 bzw. 60 in der zugehörigen Zylinderkammer 66b oder 66c hydraulischer Druck aufgebaut werden kann.

Der Kolben 68 ist mit Hilfe eines Lagers 70 druck- und zugkräfteübertragend mit der Spindel-Mutter 28 gekoppelt, wobei die Spindel-Mutter 28 dennoch im Gehäuse 22 verdrehbar ist. An der Mantelfläche der Spindel-Mutter 28 ist eine längsgerichtete (Kerb-)Verzahnung 72 ausgebildet, mittels der die Spindel-Mutter 28 in dem Kegelrad 20 momentenübertragend und in Längsrichtung des Gehäuses 22 verschiebbar geführt ist. Beim oben erläuterten Anlegen von Druck in einer der beiden Zylinderkammern 66b oder 66c wird auf den Kolben 68 eine hydraulische Kraft ausgelöst, die dieser Kolben 68 auf die Spindel-Mutter 28 überträgt. Da die Spindel-Mutter 28 in dem Kegelrad 20 nicht frei verdrehbar ist, verschiebt sie bei ihrer Bewegung innerhalb des Gehäuses 22 auch die Getriebe-Spindel 32, wodurch zusätzlich oder unabhängig zu einer von einem Fahrer ausgeübten Lenkbewegung eine Überlagerungsbewegung auf das Lenkgestänge des Fahrzeugs ausgeübt wird.

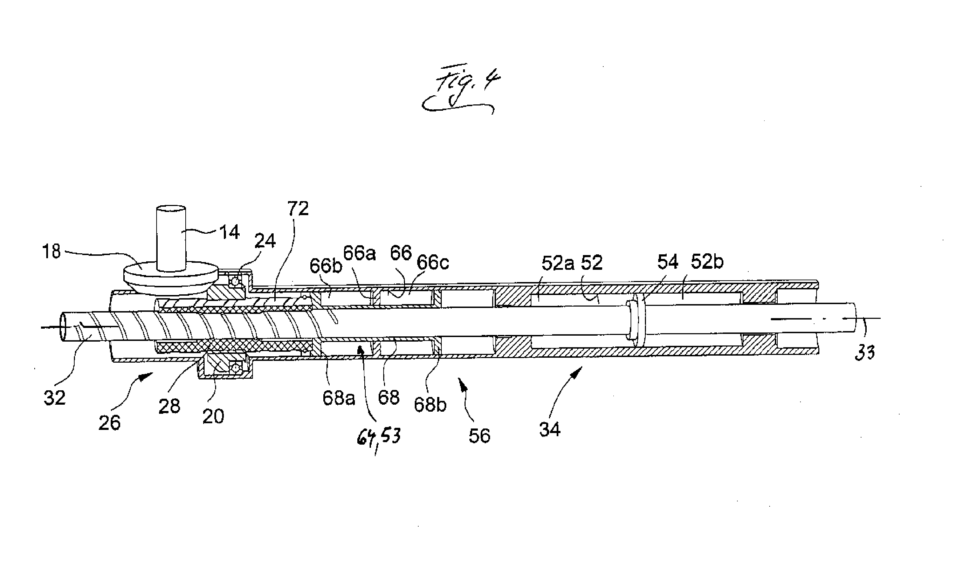

In Fig.4 ist ein Ausführungsbeispiel eines Lenkgetriebes 16 veranschaulicht, welches im wesentlichen wie das in Fig.3 dargestellte Lenkgetriebe 16 gestaltet ist. Bei dem Lenkgetriebe 16 der Fig.4 ist jedoch zwischen der Spindel-Mutter 28 und dem Kegelrad 20 nicht eine Linearführung sondern eine Verzahnung 72 mit einer Gewindesteigung vorgesehen. Diese Gewindesteigung führt dazu, dass beim Verschieben der Spindel-Mutter 28 mittels des Kolbens 68 die Spindel-Mutter 28 ferner in dem Kegelrad 20 verdreht wird und dabei aufgrund des zwischen der Spindel-Mutter 28 und der Getriebe-Spindel 32 ausgebildeten Kugelgewindetriebs 30 die Getriebe-Spindel 32 im Vergleich zu dem in Fig.3 dargestellten Ausführungsbeispiel über einen größeren Weg verschoben wird. Am Kolben 68 kann daher mit einem vergleichsweise kleinen Hub gearbeitet werden.

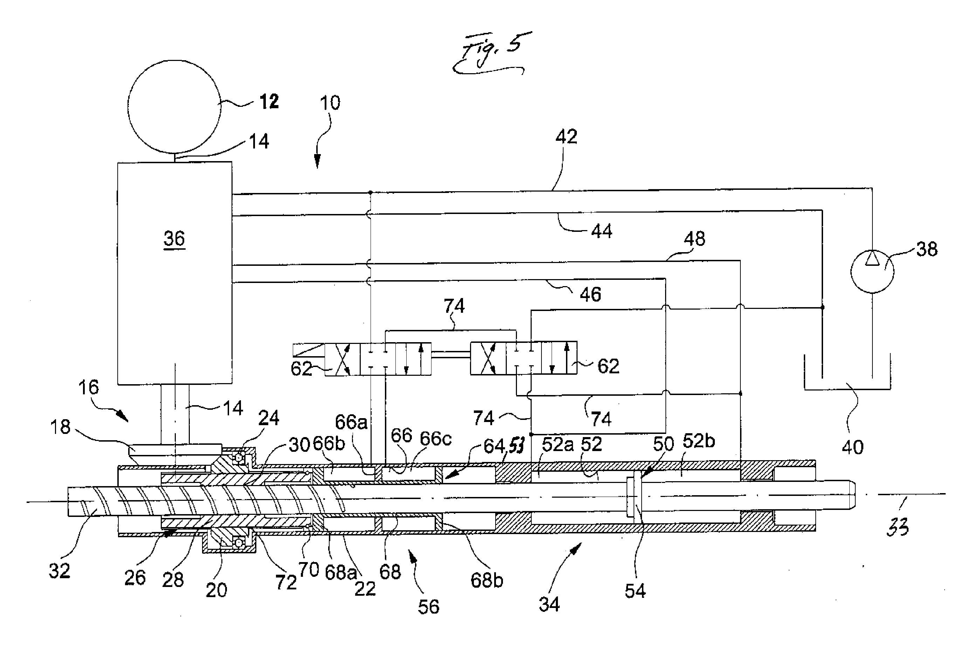

In Fig.5 ist ein Ausführungsbeispiel einer Überlagerungslenkung 10 dargestellt, bei der als einzige Änderung zu dem in Fig.31 dargestellten Ausführungsbeispiel zur Steuerung der Zylinder-Kolben-Anordnung 64 zwei miteinander gekoppelte 4/3-Wegeventile 62 vorgesehen sind. Ferner ist anstelle der vierten Leitung 60 eine Verbindungsleitung 74 vorgesehen, die einzelne Anschlüsse der beiden 4/3-Wegeventile 62 miteinander verbindet und weiter zu den Zylinderkammern 52a bzw. 52b des Zylinders 52 geführt ist. Die beiden 4/3-Wegeventile 62 sind dabei derart gestaltet, dass beim Ablassen von Hydraulikfluid aus einer der beiden Zylinderkammern 66b oder 66c dieses Fluid in eine der Zylinderkammern 52a bzw. 52b verschoben wird. Das aus dem Zylinder 66 in den Zylinder 52 verschobene Fluidvolumen führt dazu, dass trotz der Überlagerungsbewegung an der Getriebe-Spindel 32 an der Lenkunterstützungseinrichtung 34 kein größerer Volumenstrom benötigt wird, als bei einem herkömmlichen Lenkgetriebe

Die hiermit vorgeschlagenen Lenkgetriebe zeichnen sich durch äußerst kompakte Bauweise bei höchster funktionaler Zuverlässigkeit aus, wobei noch darauf hingewiesen sei, dass durchaus eine Vielzahl von Details abweichend von obigen Erläuterungen gestaltet sein kann, ohne den Inhalt der Patentansprüche zu verlassen.

### Bezugszeichenliste:

- 10: Überlagerungslenkung
- 12: Lenkhandhabe
- 14: Lenksäule bzw. Lenkspindel
- 16: Lenkgetriebe
- 18: Tellerrad bzw. Kegelrad
- 19: erstes Stellelement
- 20: Kegelrad
- 22: Gehäuse (von 16)
- 23: Verdrehsicherungsnut
- 24: (Kugel-)Lager
- 26: Mutter-Spindel-Anordnung
- 28: Spindel-Mutter
- 30: Kugelgewindetrieb
- 32: Getriebe-Spindel
- 33: Spindel-Längsachse
- 34: Lenkunterstützungseinrichtung
- 35: Zahnriemen / endloses Zugmittelgetriebe
- 36: Lenkventil
- 37: Elektromotor (von 34)
- 38: Pumpe
- 40: Tank
- 42: Druckleitung
- 44: Rückleitung
- 46: erste Leitung
- 48: zweite Leitung
- 50: erste Zylinder-Kolben-Anordnung
- 52: erster Zylinder
- 52a: Zylinderkammer
- 52b: Zylinderkammer
- 53: zweites Stellelement
- 54: erster Kolben
- 55: Schiebestück
- 56: Überlagerungseinrichtung
- 57: Gewinde-Spindel
- 58: dritte Leitung
- 59: Elektromotor (von 56)
- 60: vierte Leitung
- 61: Zugmittelgetriebe / Zahnriemen
- 62: 4/3-Wegeventil
- 63: Mitnahmeelement
- 64: zweite Zylinder-Kolben-Anordnung
- 65: Kerbverzahnung
- 66: zweiter Zylinder
- 66a: Trennwand
- 66b: Zylinderkammer
- 66c: Zylinderkammer
- 67: Sicherheitsverriegelung
- 68: zweiter Kolben
- 68a: Stirnwand
- 68b: Stirnwand
- 70: Dreh-Lager
- 72: Verzahnung
- 74: Verbindungsleitung

## Patentansprüche

1. Lenkgetriebe mit Überlagerungslenkung für ein zweispuriges Fahrzeug, mit einem Rotations-Translations-Trieb, mit dem eine Drehbewegung einer Lenkhandhabe in eine translatorische Bewegung einer Getriebe-Spindel (32) gewandelt werden kann, an deren Enden direkt oder indirekt an den lenkbaren Fahrzeug-Rädern geeignet angreifende Spurstangen angelenkt sind, sowie mit einer Überlagerungseinrichtung (56), mit welcher die Getriebe-Spindel (32) gegenüber der durch die Lenkhandhabe vorgegebenen Position weiter translatorisch verlagert werden kann,
**dadurch gekennzeichnet, dass** der Rotations-Translations-Trieb durch eine auf der Getriebe-Spindel (32) gewindeartig verdrehbare Spindel-Mutter (28) gebildet ist, die über ein erstes Stellelement (19) unter Beibehaltung ihrer Position in Richtung der Spindel-Längsachse (33) betrachtet um diese Längsachse verdrehbar ist, während eine weitere translatorische Verlagerung der Getriebe-Spindel (32) im Zusammenwirken mit der Spindel-Mutter (28) durch ein zweites Stellelement (53) erzeugbar ist, das entweder bei gegen Verdrehen um ihre Längsachse (33) gesicherter Getriebe-Spindel (32) eine Längsverlagerung der Spindel-Mutter (28) in Richtung der Spindel-Längsachse (33) erzeugen oder bei gegen eine Längsverlagerung gesicherter Spindel-Mutter (28) eine Rotationsbewegung der Getriebe-Spindel (32) um ihre Längsachse (33) bewirken kann.

2. Lenkgetriebe mit Überlagerungslenkung nach Anspruch 1,
wobei am ersten Stellelement (19) und/oder am zweiten Stellelement (53) ein dessen jeweilige Verstellbewegung hervorrufender oder zumindest unterstützender Elektromotor (37, 59) vorgesehen ist.

3. Lenkgetriebe mit Überlagerungslenkung nach Anspruch 2,
**dadurch gekennzeichnet, dass** das erste Stellelement (19) auf der Spindel-Mutter (28) gegenüber dieser drehfest, jedoch in Richtung der Spindel-Längsachse (33) verschiebbar aufgebracht ist und über geeignete Getriebe von der Lenkhandhabe sowie von einem eine Servokraft einleitenden Elektromotor (37) um die Spindel-Längsachse (33) verdrehbar ist.

4. Lenkgetriebe mit Überlagerungslenkung nach Anspruch 3,
**dadurch gekennzeichnet, dass** das Getriebe zwischen einer mit der Lenkhandhabe verbundenen Lenksäule (14) und dem ersten Stellelement (19) als Kegelrad-Tellerrad-Zahnrad-Getriebe ausgebildet ist.

5. Lenkgetriebe nach einem der vorangegangenen Ansprüche,
**dadurch gekennzeichnet, dass** das Getriebe zwischen dem ein Servomoment einleitenden Elektromotor (37) und dem ersten Stellelement (19) ein endloses Zugmittelgetriebe (35) ist.

6. Lenkgetriebe nach einem der vorangegangenen Ansprüche,
**dadurch gekennzeichnet, dass** die Überlagerungseinrichtung (56) ein vorzugsweise an der Stirnseite der Spindel-Mutter (28) über ein geeignetes Lager (70) drehbar angebundenes Schiebestück (55) aufweist, das mittels eines Elektromotors (59) über einen weiteren Spi n-deltrieb in Richtung der Längsachse (33) der gegen Verdrehen gesicherten Getriebe-Spindel (32) verlagerbar ist.

7. Lenkgetriebe nach einem der Ansprüche 1-5,
**dadurch gekennzeichnet, dass** die Überlagerungseinrichtung (56) ein von einem Elektromotor (59) angetriebenes und mit der Getriebe-Spindel (32) im Hinblick auf eine Verdrehung derselben über eine Kerbverzahnung (65) oder dgl. zusammenwirkendes Mitnahmeelement (63) aufweist.

8. Lenkgetriebe nach Anspruch 1,
**dadurch gekennzeichnet, dass** die Überlagerungseinrichtung (56) mit einer in das Lenkgetriebe (16) integrierten Zylinder-Kolben-Anordnung (64) gestaltet ist.

9. Lenkgetriebe nach einem der vorangegangenen Ansprüche,
**dadurch gekennzeichnet, dass** die Spindel-Mutter (28) mittels des ersten Stellelements (19) des Rotations-Translations-Triebes drehbar ist, das durch eine Kerbverzahnung (72) oder einen Kugelgewindetrieb (30) mit der Spindel-Mutter (28) momentenübertragend gekoppelt ist.

10. Lenkgetriebe nach einem der vorangegangenen Ansprüche,
**dadurch gekennzeichnet, dass** die Kerbverzahnung (72) oder der Kugelgewindetrieb zwischen der Spindel-Mutter (28) und dem ersten Stellelement (19) mit einer Gewindesteigung versehen ist.

11. Lenkgetriebe nach einem der Ansprüche 8 bis 10,
**dadurch gekennzeichnet, dass** der Kolben (68) der Überlagerungseinrichtung (56) kraftübertragend aber drehbar mit der Spindel-Mutter (28) der Mutter-Spindel-Anordnung (26) gekoppelt ist.

12. Lenkgetriebe nach einem der Ansprüche 8 bis 11,
**dadurch gekennzeichnet, dass** eine Lenkunterstützungseinrichtung (34) vorgesehen ist, die ebenfalls mit einer Zylinder-Kolben-Anordnung (50) gestaltet ist.

13. Lenkgetriebe nach Anspruch 12,
**dadurch gekennzeichnet, dass** die Kolben (68, 54) der Überlagerungseinrichtung (56) und der Lenkunterstützungseinrichtung (34) koaxial ausgerichtet sind.

14. Lenkgetriebe nach Anspruch 12 oder 13,
**dadurch gekennzeichnet, dass** die Wirkfläche des Kolbens (68) der Überlagerungseinrichtung (56) gleich groß wie die Wirkfläche des Kolbens (54) der Lenkunterstützungseinrichtung (34) gestaltet ist.

15. Lenkgetriebe nach einem der Ansprüche 12 bis 14,
**dadurch gekennzeichnet, dass** eine wahlweise zu öffnende hydraulische Verbindung (74) zwischen der Überlagerungseinrichtung (56) und der Lenkunterstützungseinrichtung (34) vorgesehen ist, durch die beim Bewegen des Kolbens (68) der Überlagerungseinrichtung (56) ein Hydraulikfluid in den Zylinder (52) der Lenkunterstützungseinrichtung (34) verschoben werden kann.

16. Lenkgetriebe nach einem der Ansprüche 8 bis 15,
**dadurch gekennzeichnet, dass** für den Kolben (68) der Überlagerungseinrichtung (56) eine Sperreinrichtung zur Lagesicherung des Kolbens (68) bei einer Betriebsstörung vorgesehen ist.
